# EUROPÄISCHE PATENTSCHRIFT

(11) **EP 1 017 749 B1**
(45) Veröffentlichungstag und Bekanntmachung des Hinweises auf die Patenterteilung: **09.04.2003**
(21) Anmeldenummer: 98951387.4
(22) Anmeldetag: 12.09.1998
(51) Int. Cl.: C09D 133/00, B05D 1/34

(54) **HÄRTBARE BESCHICHTUNGSZUSAMMENSETZUNG**
HARDENABLE COATING COMPOSITION
COMPOSITION DE REVETEMENT DURCISSABLE

(30) Priorität: 20.09.1997 DE 19741554
(43) Veröffentlichungstag der Anmeldung: 12.07.2000
(73) Patentinhaber: BASF Coatings AG, 48165 Münster (DE)
(72) Erfinder: SCHWARTE, Stephan, D-48282 Emsdetten (DE); SAPPER, Ekkehard, D-97222 Rimpar (DE); WIEMANN, Gudrun, D-48291 Telgte (DE); WIEMANN, Reinhard, D-48291 Telgte (DE)
(74) Vertreter: Fitzner, Uwe, Dr.
(86) Internationale Anmeldenummer: EP9805810
(87) Internationale Veröffentlichungsnummer: WO99015597

(56) Entgegenhaltungen:
- WO-A1-93/07195
- WO-A1-96/14348

## Beschreibung

Die vorliegende Erfindung betrifft eine härtbare Beschichtungszusammensetzung, die (A1) mindestens eine Poly(meth)acrylatdispersion, (A2) mindestens ein Rheologiehilfsmittel, (A3) mindestens eines reaktive Gruppen für Isocyanat enthaltendes Poly(meth)acrylatharzes und (B) mindestens eines Vernetzungsmittels, enthält. Die vorliegende Erfindung betrifft weiterhin ein Verfahren zur Herstellung eines schützenden und/oder dekorativen Überzugs auf einer Substratoberfläche sowie die Verwendung der Beschichtungsmittel im Bereich der Autoreparaturlackierung.

Aus dem Stand der Technik sind Verfahren zur Lackierung von Fahrzeug- und insbesondere Automobilkarosserien bekannt, bei denen das Substrat in der Regel zuerst mit einem Elektrotauchlack und/oder Steinschlagzwischengrund bzw. einer Füllerschicht beschichtet wird und anschließend unter Verwendung mindestens eines ein Pigment enthaltenden Lackes eine Basislackschicht aufgebracht wird und diese Basislackschicht gegebenenfalls mit einem transparenten Lack überlackiert wird. Die so erhaltene ein- bzw. mehrschichtige Lackierung wird anschließend eingebrannt.

Als transparente Lacke, die auf die Basislackschicht aufgebracht werden können, werden seit einigen Jahren Pulver- bzw. Pulverslurry-Klarlacke eingesetzt. Diese Pulverlacke haben den Vorteil, daß sie sich gut auf das Substrat aufbringen lassen. Die Verträglichkeit der Pulver- bzw. Pulverslurry-Klarlacke mit den üblicherweise eingesetzten Basislacken auf wäßriger Basis ist jedoch begrenzt. Der Einsatz von Pulverlacken auf den Wasserbasislakken führt beim Trocknen häufig zu einem "Cracking", das bedeutet, daß in der Basislackschicht kleine Risse auftreten, wodurch das Gesamterscheinungsbild der Lackierung beeinträchtigt wird.

Aus DE 196 52 842 A1 ist eine Verfahren zur Herstellung eines mehrschichtigen Überzugs auf einer Substratoberfläche bekannt, bei dem für die Basisbeschichtung eine wäßrige Polymerdispersion aus Acrylatpolymeren auf der Basis von C1-C8-Alkyl(meth)acrylat-Monomeren, vinylaromatischen Monomeren und (Meth)acrylsäure sowie ein nicht-assoziativ wirkender Verdicker eingesetzt sind. Als Zusatzmittel werden weitere wasserverdünnbare Harze verwendet, wobei als Komponenten neben Aminoplastharzen und Polyestern auch Polyurethane allgemein, speziell acrylierte Polyurethane und urethanische Acrylate mit dem Ziel vorgesehen sind, lacktechnische Eigenschaften wie die Haftung zu verbessern oder als Anreibeharze für Pigmente zu dienen.

Der vorliegenden Erfindung liegt die Aufgabe zugrunde, eine Basisbeschichtungszusammensetzung zur Verfügung zu stellen, die mit Pulver- bzw. Pulverslurry-Klarlacken gut verträglich ist und während des Trocknungsvorganges keine Risse bildet.

Gegenstand der vorliegenden Erfindung ist demgemäß eine Basisbeschichtungszusammensetzung, die als Bindemittel
(A1) ein Acrylat-Polymer auf Basis von 30 bis 60 Gew.-% C₁-C₈-Alkyl(meth)acrylat- Monomeren, 30 bis 60 Gew.-% vinylaromatischen Monomeren und 0,5 bis 10 Gew.-% (Meth)acrylsäure und
(A2) mindestens einen nicht- assoziativ wirkenden Verdicker, der ein Acrylat-Copolymer auf Basis von (C₁-C₆)-Alkyl(meth)acrylat und (Meth)acrylsäure enthält,
(A3) mindestens ein reaktive Gruppen für Isocyanat enthaltendes Poly(meth)acrylatharz, das von A1 verschieden ist und
(B) mindestens ein Vernetzungsmittel
enthält.

Überraschenderweise wurde festgestellt, daß die erfindungsgemäße härtbare Beschichtungszusammensetzung sich hervorragend als Basisbeschichtungszusammensetzung bei der Automobillackierung eignet, die sowohl auf den üblichen Steinschlagzwischengrund bzw. auf eine Füllerschicht als auch auf einen weiteren Wasserbasislack aufgebracht werden kann und anschließend mit einem Pulver- bzw. Pulverslurry-Klarlack überlackiert werden kann, ohne daß eine Rißbildung in der fertigen Lackierung beobachtet wird.

Die Acrylatdispersion der Komponente (A1) kann als C₁-C₈-Alkyl(meth)acrylat-Monomereinheiten die linearen und verzweigtkettigen Derivate enthalten, wobei Methyl(meth)acrylat, Ethyl(meth)acrylat, n-Propyl- und iso-Propyl(meth)acrylat, n-Butyl- und iso-Butyl(meth)acrylat und 2-Ethylhexyl(meth)acrylat bevorzugt sind. Als weitere Monomere können auch (Meth)acrylamid-Monomere und deren Derivate enthalten sein.

Als vinylaromatische Monomere, die als Monomereinheiten im Acrylat-Polymer der Komponete (i) vorliegen, können z.B. Styrol, α-Alkylstyrol und Vinyltoluol genannt werden.

Das Acrylat-Polymer kann nach aus dem Stand der Technik bekannten Verfahren, beispielsweise Emulsionspolymerisation, hergestellt werden. Vorzugsweise wird das Acrylat-Polymer in Form einer Dispersion eingesetzt. Während des Herstellverfahrens wird das Mengenverhältnis zwischen den Monomeren und dem Wasser vorzugsweise so eingestellt, daß die resultierende Dispersion einen Feststoffgehalt von 30 bis 60 Gew.-%, vorzugsweise 35 bis 60 Gew.-%, aufweist und direkt zur Herstellung der Basisbeschichtungszusammensetzung eingesetzt werden kann. Ein besonders geeignetes Acrylat-Polymer ist im Handel als wäßrige Dispersion unter der Bezeichnung Acronal 290 D (BASF AG; Ludwigshafen) erhältlich.

Zur Herstellung einer Dispersion des Acrylat-Polymers wird als Emulgator vorzugsweise ein anionischer Emulgator allein oder im Gemisch mit anderen eingesetzt.

Beispiele für anionische Emulgatoren sind die Alkalisalze von Schwefelsäurehalbestern von Alkylphenolen oder Alkoholen, ferner die Schwefelsäurehalbester von oxethylierten Alkylphenolen oder oxethylierten Alkoholen, vorzugsweise die Alkalisalze des Schwefelsäurehalbesters eines mit 4 bis 5 Mol Ethylenoxid pro Mol umgesetzten Nonylphenols, Alkyl - oder Arylsulfonats, Natriumlaurylsulfat, Natriumlaurylethoxylatsulfat und sekundäre Natriumalkansulfonate, deren Kohlenstoffkette 8 - 20 Kohlenstoffatome enthält. Die Menge des anionischen Emulgators beträgt 0,1 bis 5,0 Gew.-%, bezogen auf die Monomeren, vorzugsweise 0,5 bis 3,0 Gew.-%. Ferner kann zur Erhöhung der Stabilität der wäßrigen Dispersionen zusätzlich ein nichtionischer Emulgator vom Typ eines ethoxylierten Alkylphenols oder Fettalkohols, z.B. ein Additionsprodukt von 1 Mol Nonylphenol und 4 bis 30 Mol Ethylenoxid in Mischung mit dem anionischen Emulgator eingesetzt werden.

Die Glasübergangstemperatur des Acrylatpolymers liegt vorzugsweise zwischen 15°C und 35°C, besonders bevorzugt zwischen 20°C und 25°C.

Das erfindungsgemäß eingesetzte Acrylatpolymer hat bevorzugt ein Zahlen-mittleres Molmasse (Bestimmung: Gelpermeationschromatographisch mit Polystyrol als Standard) von 200.000 bis 2.000.000, vorzugsweise von 300.000 bis 1.500.000.

Als Verdicker-Komponente A2 in der Basisbeschichtungszusammensetzung werden erfindungsgemäß Acrylat-Copolymere mit nicht-assoziativ wirkenden Gruppen eingesetzt, die als Monomereinheiten (C₁-C₆)-Alkyl(meth)acrylat und (Meth)acrylsäure enthalten. Ein bevorzugtes Copolymer enthält als Monomereinheiten (Meth)acrylsäure und mindestens zwei unterschiedliche (C₁-C₆)-Alkyl(meth)acrylatmonomere. Im Copolymer liegt die (Meth)acrylsäure bevorzugt in Mengen von 40 Gew.-% bis 60 Gew.-%, besonders bevorzugt von 46 Gew.-% bis 55 Gew.-%, bezogen auf die Menge des gesamten Copolymers, vor. Das (C₁-C₆)-Alkyl(meth)acrylatmonmer I ist vorzugsweise in Mengen von 30 Gew.-% bis 50 Gew.-%, insbesondere 36 Gew.-% bis 46 Gew.-%, und das (Meth)acrylatpolymer II vorzugsweise in Mengen von 1 Gew.-% bis 10 Gew.-%, insbesondere 2 Gew.-% bis 8 Gew.-%, jeweils bezogen auf die Menge des gesamten Copolymers, enthalten. Das Rheologiehilfsmittel sollte der Basisbeschichtungszusammensetzung insbesondere bei dem eingesetzten, in der Regel alkalischen pH-Wert die gewünschte Viskosität verleihen. Ein besonders bevorzugter Verdicker ist, wenn er als Dispersion vorliegt, dünnflüssig und verdickt bei neutralem bzw. basischem pH-Wert. Das Acrylat-Copolyer wird der geeigneterweise als fertige Dispersion eingesetzt. Als Emulgatoren enthalten derartige Dispersionen vorzugsweise Fettalkoholalkoxylate, insbesondere C₈-C₂₂-Fettalkoholethoxylate. Eine besonders geeignete Acrylat-Copolymer-Dispersion ist im Handel unter der Bezeichnung Viscalex HV 30 (Allied Corporation, Groß Britannien) erhältlich.

Der Verdicker ist in der erfindungsgemäßen Basisbeschichtungszusammensetzung vorzugsweise in einer Menge von 0,5 bis 5,0 Gew.-%, insbesondere etwa 0,3 bis 1,5 Gew.-%, bezogen auf den Festkörpergehalt, enthalten. Üblicherweise wird der Verdicker als Dispersion mit einer Konzentration von 5 bis 45 Gew.-%, vorzugsweise von 7 bis 35 Gew.-% eingesetzt.

Die Basisbeschichtungszusamensetzung kann noch weitere Verdicker bzw. Rheologiehilfsmittel, wie ionische Schichtsilikate, Xanthan Gum, Diharnstoffverbindungen, Polyurethanverdicker, Bentonit, Wachse sowie Wachscopolymere enthalten.

Als Komponente A3 ist ein mindestens eine reaktive Gruppe für Isocyanat enthaltendes Poly(meth)acrylatharz enthalten. Geeignete gegenüber Isocyanatgruppen reaktive Gruppen sind insbesondere Hydroxylgruppen sowie primäre und/oder sekundäre Aminogruppen.

In einer bevorzugten Ausführungsform der vorliegenden Erfindung werden hydroxylgruppenhaltige Poly(meth)acrylatharze mit einer OH-Zahl von 70 bis 220 mg/KOH/g, insbesondere 90 bis 150 mgKOH/g und einer Säurezahl von 0 bis 20 mgKOH/g, insbesondere 0 bis 10 mgKOH/g eingesetzt.

Die Poly(meth)acrylatharze der Komponente A3 sind herstellbar nach den üblichen Verfahren, wie beispielsweise der Lösungspolymerisation in Gegenwart eines Initiators und ggf. in Anwesenheit eines Polymerisationsreglers. Die Polymerisation erfolgt üblicherweise bei Temperaturen von 100 bis 180°C. Als Initiator sind peroxidische Initiatoren, Azoinitiatoren und thermolabile Verbindungen, z.B. auf Basis hochsubstituierter Ethanderivate, geeignet.

Die Polymerisationsbedingungen (Reaktionstemperatur, Zulaufzeit der Monomerenmischung, Menge und Art der organischen Lösemittel und Polymerisationsinitiatoren, eventuelle Mitverwendung von Molekulargewichtsreglern, wie z.B. Mercaptanen, Thiolglykolsäureestern und Chlorwasserstoffen) werden so ausgewählt, daß die erfindungsgemäß eingesetzten Polyacrylatharze ein zahlenmittleres Molekulargewicht von maximal 10.000, bevorzugt 1.000 bis 5.000 (bestimmt durch Gelpermeationschromatographie unter Verwendung von Polystrol als Eichsubstanz) aufweisen.

Zur Herstellung der Poly(meth)acrylatharze der Komponente A3 können alle üblicherweise eingesetzten Monomere eingesetzt werden.

Zur Herstellung der Poly(meth)acrylatharze der Komponente A3 sind hydroxylgruppenhaltige Monomere, wie z.B. Hydroxialkylester α,β-ungesättigter Carbonsäuren mit primären oder sekundären Hydroxylgruppen geeignet. Ist eine hohe Reaktivität des Acrylatcopolymerisats erwünscht, können ausschließlich Hydroxyalkylester mit primären Hydroxylgruppen eingesetzt werden; soll das Polyacrylat weniger reaktiv sein, können ausschließlich Hydroxyalkylester mit sekundären Hydroxylgruppen eingesetzt werden. Selbstverständlich können auch Mischungen von Hydroxyalkylestern mit primären Hydroxylgruppen und Hydroxyalkylestern mit sekundären Hydroxylgruppen verwendet werden.

Beispiele für geeignete Hydroxylalkylester α,β-ungesättigter Carbonsäuren mit primären Hydroxylgruppen sind Hydroxyethylacrylat, Hydroxypropylacrylat, Hydroxybutylacrylat, Hydroxyamylacrylat, Hydroxyhexylacrylat, Hydroxyoctylacrylat und die entsprechendene Methacrylate. Als Beispiele für verwendbare Hydroxyalkylester mit einer sekundären Hydroxylgruppe seien 2-Hydroxybutylacrylat, 3-Hydroxybutylacrylat und die entsprechenden Methacrylate genannt. Selbstverständlich können jeweils auch die entsprechenden Ester anderer α, β-ungesättigter Carbonsäuren, wie z.B. der Crotonsäure und der Isocrotonsäure eingesetzt werden.

Vorteilhaft kann das hydroxylgruppenhaltige Monomer zumindest teilweise ein Umsetzungsprodukt aus einem Mol Hydroxyethylacrylat und/oder Hydroxyethylmethacrylat und durchschnittlich zwei Mol ε-Caprolacton sein. Als hydroxygruppenhaltiges Monomer kann zumindest teilweise auch ein Umsetzungsprodukt aus Acrylsäure und/oder Methacrylsäure mit der äquivalenten Menge eines Glycidylesters einer Carbonsäure mit einem tertiären α -Kohlenstoffatom eingesetzt werden. Glycidylester stark verzweigter Monocarbonsäuren sind unter dem Handelsnamen "Cardura®" erhältlich. Die Umsetzung der Acrylsäure oder Methacrylsäure mit dem Glycidylester einer Carbonsäure mit einem tertiären α-Kohlenstoffatom kann vor, während oder nach der Polymerisationsreaktion erfolgen.

Geeignet sind femer auch Alkylester ethylenisch ungesättigter Carbonsäuren, beispielsweise Alkylester der (Meth)Acrylsäure, der Croton- und Isocroton- und der Maleinsäure. Als Beispiele für solche Monomere seien Methyl(meth)acrylat, Ethyl(meth)acrylat, Butyl(meth)acrylat, tert-Butyl(meth)acrylat, Isopropyl(meth)acrylat, Isobutyl(meth)acrylat, Pentyl(meth)acrylat, Isoamyl(meth)acrylat, Hexyl(meth)acrylat, 2-Ethylhexyl(meth)acrylat, Furfuryl(meth)acrylat, Octyl(meth)acrylat, 3,5,5-Trimethylhexyl(meth)acrylat, Decyl(meth)acrylat, Lauryl(meth)acrylat, Hexadecyl(meth)acrylat, Octadecyl(meth)acrylat, Stearyl(meth)acrylat und Ethyltriglykol(meth)acrylat genannt.

Auch sind cycloaliphatische Ester der Acrylsäure und/oder Methacrylsäure geeignet, wie Cyclohexylacrylat, Cyclohexylmethacrylat, 4-tert-Butylcyclohexylmethacrylat, Isobornylacrylat und Isobornylmethacrylat. Bevorzugt wird 4-tert-Butylcyclohexylacrylat und/oder 4-tert-Butylcyclohexylmethacrylat eingesetzt.

Femer sind auch vinylaromatische Verbindungen geeignet. Vorzugsweise enthält die vinylaromatische Verbindung 8 bis 9 Kohlenstoffatome je Molekül. Beispiele für geeignete Verbindungen sind Styrol, Vinyltoluole, α-Methylstryrol, Chlorstyrole, o-, m- oder p-Methylstyrol, 2,5-Dimethylstyrol, p-Methoxystyrol, p-Acetamidostyrol und m-Vinylphenol. Bevorzugt werden Vinyltoluole sowie insbesondere Styrol eingesetzt.

Weitere geeignete Monomere sind Alkoxyethylacrylate, Aryloxyethylacrylate und die entsprechenden Methacrylate, wie z.B. Butoxyethyl(meth)acrylat und Phenoxyethyl(meth)acrylat sowie Methacrylnitril und Acrylnitril sowie Alkylester von anderen ethylenisch ungesättigten Carbonsäuren, wie z.B. Alkylester der Croton- und Isocrotonsäure sowie polymerisierbare Vinylether und Vinylester.

Als Vemetzerkomponente B kommen insbesondere Polyisocyanate in Betracht. Bei den Polyisocyanaten handelt sich um beliebige organische Polyisocyanate mit aliphatisch, cycloaliphatisch, araliphatisch und/oder aromatisch gebundenen, freien oder verkappten Isocyanatgruppen. Bevorzugt werden Polyisocyanate mit 2 bis 5 Isocyanatgruppen pro Molekül eingesetzt. Gegebenenfalls können den Polyisocyanaten noch geringe Mengen organisches Lösemittel, bevorzugt 1 bis 25 Gew.-%, bezogen auf reines Polyisocyanat, zugegeben werden, um so die Einarbeitbarkeit des Isocyanates zu verbessern. Als Zusatzmittel geeignete Lösemittel für Polyisocyanate sind beispielsweise Ethoxyethylpropyonat, Polyacetat und ähnliche.

Die verkappten Isocyanate können im Stand der Technik übliche Verkappungsmittel enthalten.

Blockierte Polyisocyanate werden insbesondere dann eingesetzt, wenn als Komponente A1 eine Polyacrylatdispersion eingesetzt wird, die mit Ammoniak oder einem Amin neutralisiert wurde, um Nebenreaktionen mit dem Neutralisierungsmittel zu vermeiden. Auf der anderen Seite werden die unblockierten Polyisocyanate insbesondere dann eingesetzt, wenn eine Polyacrylatdispersion eingesetzt wird, die mit einem Alkali- oder Erdalkalihydroxyd neutralisiert wurde.

Beispiele für geeignete Isocyanate sind beispielsweise in "Methoden der organischen Chemie", Houben-Weyl, Band 14/2, 4. Auflage, Georg Thieme Verlag, Stuttgart 1963, Seite 61 bis 70, und von W. Siefken, Liebigs Ann. Chem. 562, 75 bis 136, beschrieben. Beispielsweise geeignet sind 1,2-Ethylendiisocyanat, 1,4-Tetramethylendiiso-cyanat, 1,6-Hexamethylendiisocyanat, 2,2,4- bzw. 2,4,4-Trimethyl-1,6-hexamethylendiisocyanat, 1,12-Dode-candiisocyanat, ω,ω'-Diisocyanatodipropylether, Cyclobutan-1,3-diisocyanat, Cyclohexan1,3- und -1,4-diiso-cyanat, 2,2- und 2,6-Diisocyanato-1-methylcyclohexan, 3-lsocyanatomethyl -3,5,5-trimethylcyclohexyliso-cyanat("lsophorondiisocyanat"), 2,5- und 3,5-Bis(iso-cyanatomethyl)-8-methyl-1,4-methano-decahydronaphtha-lin, 1,5-, 2,5-, 1,6- und 2,6-Bis(isocyanatomethyl)-4,7-methanohexahydroindan, 1,5-, 2,5-, 1,6- und 2,6-Bis(isocyanato)-4,7-methanhexahydroindan, Dicyclohexyl-2,4'- und -4,4'-diisocyanat, 2,4- und 2,6-Hexa-hydrotoluylendiisocyanat, Perhydro-2,4'- und -4,4'-di-phenylmethandiisocyanat, ω,ω'-Diisocyanato-1,4-diethyl-benzol, 1,3-und 1,4-Phenylendiisocyanat, 4,4'-Diiso-cyanato-diphenyl, 4,4'-Diisocyanato-3,3'-dichlordi-phenyl, 4,4'-Diisocyanato-3,3'-dimethoxi-diphenyl, 4,4'-Diisocyanato-3,3'-dimethyl-diphenyl, 4,4'-Diiso-cyanato-3,3'-diphenyl-diphenyl, 2,4'- und 4,4'-Diisocyanatodiphenylmethan, Naphthylen-1,5-diisocyanat, Toluylendiisocyanate, wie 2,4- bzw. 2,6-Toluylendiisocyanat, N,N'-(4,4'-Dimethyl-3,3'-diisocyanatodiphenyl)-uretdion, m-Xylylendiisocyanat, Dicyclohexyl-methandiisocyanat, Tetramethylxylylendiisocyanat, aber auch Triisocyanate, wie 2,4,4'-Triisocyanatodiphenyl-ether, 4,4',4"-Triisocyanatotriphenylmethan. Bevorzugt werden, ggf. in Kombination mit den obengenannten Polyisocyanaten, Isocyanuratgruppen und/oder Biuretgruppen und/oder Allophanatgruppen und/oder Urethangruppen und/oder Harnstoffgruppen aufweisende Polyisocyanate eingesetzt. Urethangruppen aufweisende Polyisocyanate werden beispielsweise durch Umsetzung eines Teils der Isocyanatgruppen mit Polyolen, wie z.B. Trimethylolpropan und Glycerin, erhalten.

Vorzugsweise werden aliphatische oder cycloaliphatische Polyisocyanate, insbesondere Hexamethylendiisocyanat, dimerisiertes und trimerisiertes Hexamethylendiisocyanat, Isophorondiisocyanat, Dicyclohexylmethan-2,4'-diisocyanat oder Dicyclohexylmethan-4,4'-diisocyanat oder Mischungen aus diesen Polyisocyanaten eingesetzt. Ganz besonders bevorzugt werden Gemische aus Uretdion- und/oder Isocyanuratgruppen und/oder Allophanatgruppen aufweisenden Polyisocyanaten auf Basis von Hexa-methylendiisocyanat, wie sie durch katalytische Oligo-merisierung von Hexamethylendiisocyanat unter Verwen-dung von geeigneten Katalysatoren entstehen, einge-setzt. Die Polyisocyanatkomponente (B) kann im übrigen auch aus beliebigen Gemischen der beispielhaft genann-ten Polyisocyanate bestehen.

Die Menge des eingesetzten Vernetzers wird so gewählt, daß das Verhältnis der Isocyanatgruppen des Vernetzers zu den Hydroxylgruppen der Bindemittelkomponente im Bereich von 1 : 3 bis 3 : 1 liegt. Üblicherweise enthalten die erfindungsgemäßen Beschichtungsmittel 15 bis 45 Gew.-% des Acrylatharzes (A), 0 bis 30 Gew.-% der weiteren Bindemittelkomponente und 6 bis 20 Gew.-% des Vernetzungsmittels (B), jeweils bezogen auf das Gesamtgewicht des Beschichtungsmittels und bezogen auf den Festkörpergehalt der Bindemittel- und Vernetzerkomponenten.

Die erfindungsgemäßen Beschichtungsmittel enthalten ferner ein oder mehrere organische Lösungsmittel. Diese Lösungsmittel werden üblicherweise in Mengen von 20 bis 70 Gew.-%, bevorzugt von 25 bis 65 Gew.-%, jeweils bezogen auf das Gesamtgewicht des Beschichtungsmittels, eingesetzt. Beispiele für geeignete Lösungsmittel sind höher substituierte Aromaten, wie z.B. Solvent Naphtha®, Schwerbenzol, verschiedene Solvesso®-Typen, verschiedene Shellsol®-Typen und Deasol® sowie höhersiedende aliphatische und cycloaliphatische Kohlenwasserstoffe, wie z.B. verschiedene Testbenzine, Mineralterpentinöl, Tetralin und Dekalin sowie verschiedene Ester, wie z.B. Ethylglykolacetat, Butylglykolacetat, Ethyldiglykolacetat u.ä..

Neben dem oben beschriebenen Bindemittel können die härtbaren Beschichtungszusammensetungen weitere, vorzugsweise wasserverdünnbare, Bindemittel enthalten. Die können als zusätzliche Bindemittel und/oder zum Anreiben der Pigmente und/oder als rheologiesteuernde Additive dienen. Als Beispiele für solche Bindemittel werden genannt: Polyether, wie z.B. Polypropylenglykol mit einem zahlenmittleren Molekulargewicht von 400 bis 1200, wasserlösliche Celluloseether, wie Hydroxyethylcellulose, Methylcellulose oder Carboxymethylcellulose sowie synthetische Polymere mit ionischen und/oder assoziativ wirkenden Gruppen, wie Polyvinylalkohol, Poly(meth)acrylamid, Poly(meth)acrylsäure und von den Komponenten A1 und A3 verschiedene Poly(meth)acrylatharze, Polyvinylpyrrolidon, Styrol-Maleinsäureanhydrid oder Ethylen-Maleinsäureanhydrid-Copolymere und ihre Derivate, wasserlösliche oder auch hydrophob modifizierte ethoxylierte Polyurethane oder carboxylgruppenhaltige Poly(meth)acrylate. Wasserlösliche Polyurethane werden bevorzugt eingesetzt.

Als wasserverdünnbares Polyurethanharze können beliebige, handelsübliche Polyurethanharze eingesetzt werden. Bevorzugte Polyurethanharze weisen eine Säurezahl von 10 bis 60 und Zahlen-mittleres Molekulargewicht von 4.000 bis 25.000 auf. Ein Beispiel für ein Polyurethanharz wird in der DE 40 05 961 als Komponente (A) beschrieben.

Neben dem oben als Komponente A beschriebenen Bindemittel können die härtbaren Beschichtungszusammensetungen weitere, vorzugsweise wasserverdünnbare, Bindemittel enthalten. Die können als zusätzliche Bindemittel und/oder zum Anreiben der Pigmente und/oder als rheologiesteuernde Additive dienen. Als Beispiele für solche Bindemittel werden genannt: Polyether, wie z.B. Polypropylenglykol mit einem zahlenmittleren Molekulargewicht von 400 bis 1200, wasserlösliche Celluloseether, wie Hydroxyethylcellulose, Methylcellulose oder Carboxymethylcellulose sowie synthetische Polymere mit ionischen und/oder assoziativ wirkenden Gruppen, wie Polyvinylalkohol, Poly(meth)acrylamid, Poly(meth)acrylsäure und von den Komponenten A1 und A3 verschiedene Poly(meth)acrylatharze, Polyvinylpyrrolidon, Styrol-Maleinsäureanhydrid oder Ethylen-Maleinsäureanhydrid-Copolymere und ihre Derivate, wasserlösliche oder auch hydrophob modifizierte ethoxylierte Polyurethane oder carboxylgruppenhaltige Poly(meth)acrylate.

Die erfindungsgemäßen Basislacke können auch vernetzte Polymikroteilchen, wie sie z.B. in der EP-A-38 127 offenbart sind, enthalten.

Als Hilfsbindemittel kann das erfindungsgemäße Überzugsmittel auch epoxyfunktionelle und/oder carboxyl-funktionelle Bestandteile enthalten, wie übliche Glycidylverbindungen, wie z.B. Glycidylacrylat oder Glycidylmethacrylat. Als carboxyl-funktionelle Vernetzer eignen sich beispielsweise Carbonsäuren, insbesondere gesättigte, geradkettige, aliphatische Dicarbonsäuren mit 3 bis 20 C-Atomen im Molekül, wobei Dodecan-1,12-disäure bevorzugt eingesetzt wird.

Als weiteres Hilfsbindemittel kann auch Polyvinylalkohol eingesetzt werden. Es wurde festgestellt, daß durch den Zusatz von Polyvinylalkohol in einer Menge bis zu 10 Gew.-%, vorzugsweise von 1 bis 5 Gew.-%, die Verträglichkeit mit den auf der Basisbeschichtungszusammensetzung aufgebrachten Deckbeschichtungszusammensetzungen verbessert werden kann. Polyvinylalkohol wirkt Lösemittel-abstoßend, so daß in der Deckbeschichtungszusammensetzung möglicherweise enthaltenes Lösemittel oder andere Komponenten aufgrund der abstoßenden Wirkung des Polyvinylalkhols nicht in die Basisbeschichtungszusammensetzung eindringen und die Farbe verändern können.

Als weitere Vernetzer sind die auf dem Lackgebiet bekannten Vernetzer wie Melamin-Harze einsetzbar, die mit freien OH-Gruppen reagieren können.

Die Basisbeschichtungszusammensetzungen können neben den voranstehend beschriebenen Polymeren noch weitere verträgliche wasserverdünnbare Harze enthalten, wie z.B. Aminoplastharze, Polyester und Polyurethane, die im allgemeinen als Anreibeharze für Pigmente dienen.

Das Hilfsbindemittel und/oder der Vernetzer können in einer Menge bis zu 6 Gew.-%, insbesondere von 0,5 bis 6 Gew.-% eingesetzt werden.

Die erfindungsgemäß eingesetzten Basisbeschichtungszusammensetzungen weisen im allgemeinen einen Festkörpergehalt von etwa 15 bis 60 Gew.-% auf. Der Festkörpergehalt variiert mit dem Verwendungszweck der Beschichtungszusammensetzungen. Für Metalliclacke liegt er beispielsweise bevorzugt bei 12 bis 25 Gew.-%. Für unifarbige Lacke liegt er höher, beispielsweise bei 14 bis 45 Gew.-%.

Zur Neutralisierung der Komponenten (A1) und (A2) können Ammoniak und/oder Amine (insbesondere Alkylamine), Aminoalkohole und cyclische Amine, wie Di- und Triethylamin, Aminomethylpropanol, Dimethylaminoethanolamin, Diisopropanolamin, Morpholin, N-Alkylmorpholin, eingesetzt werden. Für die Neutralisation werden leicht flüchtige Amine bevorzugt. Das wäßrige Überzugsmittel wird üblicherweise auf einen pH-Wert zwischen 6 und 9, vorzugsweise 6,5 bis 7,5 eingestellt.

Die Basisbeschichtungszusammensetzung kann organische Lösemittel in einer Menge bis zu 15 Gew.-% enthalten. Als organische Lösemittel sind beispielsweise Naphthaline, Benzine und Alkohole geeignet. Als weitere flüssige Komponenten können die erfindungsgemäßen Basislacke Alkylenglykole, wie Ethylenglykol, Propylenglykol, Butylenglykol, Butandiol-1,4, Hexandiol-1,6, Neopentylglykol und andere Diole, wie Dimethylolcyclohexan, enthalten.

Als Pigmente kann die Basisbeschichtungszusammensetzung übliche, zur Lackierung von Automobilkarosserien eingesetzte Pigmente enthalten, wie z.B. Effektpigmente sowie organische und anorganische farbgebende Pigmente.

Beispiele für geeignete Effektpigmente sind handelsübliche Aluminiumbronzen, die gemäß DE-OS 36 36 183 chromatierten Aluminiumbronzen, handelsübliche Edelstahlbronzen sowie andere übliche Metallplättchen und Metallflockenpigmente sowie nichtmetallische Effektpigmente, wie z.B. Perlglanz- bzw. Interferenzpigmente.

Beispiele ür geeignete farbgebende Pigmente auf anorganischer Basis sind Titandioxid, Eisenoxide, Ruß u.ä. Beispiele für farbgebende Pigmente auf organischer Basis sind Indanthrenblau, Cromophthalrot, Irgazinorange, Sicotransgelb, Heliogengrün u.ä.

Ferner können Korrosionsschutzpigmente, wie z.B. Zinkphospat, enthalten sein.

Zusätzlich kann die Basisbeschichtungszusammensetzung auch auf dem Gebiet der Lackchemie übliche Füllstoffe enthalten. Hierzu zählen Kieselsäure, Magnesiumsilikat, Titandioxid und Bariumsulfat.

Der Anteil der Pigmente und Füllstoffe im erfindungsgemäßen Überzugsmittel kann insgesamt 3 bis 25 Gew.-%, bezogen auf den Festkörpergehalt, betragen. Das Pigment kann in beliebiger Weise zugesetzt werden, z.B. als wäßrige Slurry oder als Paste. Die Pigmente können beispielsweise mit einem Anreibeharz, wie einem Hilfsbindemittel, Dispergierhilfsmittel oder Wasser angerieben werden. Bei unifarbenen Lacken ist es bevorzugt, die Pigmente in Dispergierhilfsmittel und Wasser aufzuschlämmen. Werden Aluminium bzw. Flakes eingesetzt, so werden diese ggf. in Lösemittel sowie evtl. einem Gemisch aus Wasser und Netzmittel aufgeschlämmt oder im Hauptbindemittel oder in einem anderen Hilfsbindemittel angerieben.

Die Menge der Komponente (A1) kann in Abhängigkeit vom eingesetzten Pigment variieren. Sind die Pigmente organische und/oder anorganische farbgebende Pigmente, so ist die Komponente (A) vorzugsweise in einer Menge von 25 bis 50 Gew.-%, bezogen auf den Festkörpergehalt, enthalten. Sind die Pigmente Effektpigmente, ist die Komponente (A) vorzugsweise in einer Menge von 15 bis 30 Gew.-%, bezogen auf den Festkörpergehalt, enthalten.

Als weitere Komponente kann die Basisbeschichtungszusammensetzung Filmbildehilfsmittel enthalten. Als Filmbildehilfsmittel kommen Dicarbonsäuredialkylester, hochsiedende Benzine und Naphthaline in Betracht, die einen Siedepunkt über 100°C, vorzugsweise über 140°C aufweisen.

Die erfindungsgemäßen Beschichtungsmittel können außerdem übliche Hilfsund Zusatzstoffe in üblichen Mengen, bevorzugt 0,01 bis 10 Gew.-%, bezogen auf das Gesamtgewicht des Beschichtungsmittel, enthalten. Beispiele für geeignete Hilfs- und Zusatzstoffe sind Katalysatoren, Verlaufsmittel, wie Silikonöle, Weichmacher, wie Phosphorsäureester und Phthalsäureester, viskositätskontrollierende Zusätze, Entschäumungsmittel, Dispersionshilfsmittel, Netzmittel, vorzugsweise carboxy-funktionelle Dispergiermittel, Mattierungsmittel, UV-Absorber, Lichtschutzmittel, Antioxidantien, Radikalfänger, Biozide und/oder Wasserrückhaltemittel und ggf. Füllstoffe.

Die Basisbeschichtungszusammensetzung wird auf eine mit einem üblichen Füller beschichtete Substratoberfläche aufgebracht. Als Füller kann jeder beliebige aus dem Stand der Technik bekannte Füller eingesetzt werden.

Nach der Füllerapplikation wird die oben beschriebene Basisbeschichtungszusammensetzung in an sich bekannter Weise, beispielsweise durch Spritzen, Streichen, Tauchen, Fluten, Rakeln oder Walzen auf das Substrat, wie z.B. Metall, Kunststoff, Holz oder Glas aufgebracht.

Die Basisbeschichtungszusammensetzung kann gegebenenfalls vor Aufbringen auf die Füllerschicht noch mit Wasser zur Einstellung des Festkörpergehaltes, Lösungsmittel oder Rheologiehilfsmittel zur Einstellung der anwendungstechnischen Eigenschaften sowie ggf. eine Base zur pH-Regulierung zugesetzt werden. Sollte die Viskosität noch nicht in dem gewünschten Bereich liegen, so kann erneut Rheologiehilfsmittel (A2) oder weiterer Verdicker, ggf. in einer Menge von 0,001 bis 0,006 Gew.-%, bezogen auf den Festkörpergehalt, zugesetzt werden.

Ein weiterer Gegenstand der vorliegenden Erfindung ist ein Verfahren zur Herstellung eines eines schützenden und/oder dekorativen Überzugs auf einer Substratoberfläche, bei dem
(l) auf eine mit einem üblichen Füller beschichtete Substratoberfläche als Basisbeschichtungszusammensetzung eine wäßrige Beschichtungszusammensetzung aufgebracht wird,
(II) auf die so erhaltene Basisschicht eine geeignete transparente Deckbeschichtungszusammensetzung aufgebracht wird und
(III) die Basisschicht zusammen mit der Deckschicht eingebrannt wird,
dadurch gekennzeichnet, daß die wäßrige Basisbeschichtungszusammensetzung
(A) eine wäßrige Polymerdispersion enthält, die
   (A1) ein Acrylat-Polymer auf Basis von 30 bis 60 Gew.-% C₁-C₈-Alkyl(meth)acrylat- Monomeren, 30 bis 60 Gew.-% vinylaromatischen Monomeren und 0,5 bis 10 Gew.-% (Meth)acrylsäure und
   (A2) mindestens einen nicht-assoziativ wirkenden Verdicker, der ein Acrylat-Copolymer auf Basis von (C₁-C₆)-Alkyl(meth)acrylat und (Meth)acrylsäure enthält,
   (A3) mindestens ein reaktive Gruppen für Isocyanat enthaltendes Poly(meth)acrylatharz, das von A1 verschieden ist, und
(B) mindestens ein Vernetzungsmittel
enthält.

Die in Stufe (I) auf das Substrat aufgebrachte Basisschicht wird erfindungsgemäß in Stufe (II) mit einer geeigneten transparenten Deckbeschichtung überlackiert. Vor dem Auftragen der transparenten Deckbeschichtung läßt man das Überzugsmittel vorteilhafterweise kurz abdunsten, vorzugsweise 1 bis 15 Minuten, insbesondere 4 bis 8 Minuten, bei einer Temperatur von 60 bis 100°C, vorzugsweise von 70 bis 85°C. Der Zeitraum des Abdunstens hängt von der Temperatur ab und ist über weite Bereiche einstellbar.

Besonders beständige mehrschichtige Überzüge können erhalten werden, wenn das in einer Stufe (I) erhaltene Substrat vor dem Aufbringen der Deckbeschichtung angetrocknet wird, so daß eine ausreichende Verfilmung bzw. Vernetzung vorliegt, so daß Wasser und/oder Lösungsmittel, die ggf. in der in einer Stufe (II) aufgebrachten Deckbeschichtungszusammensetzung enthalten sind, nicht in die Basischicht diffundieren können.

Als transparente Deckbeschichtung können alle üblichen Deckbeschichtungen aufgebracht werden. Bevorzugt werden die auf dem Gebiet der Lackchemie verwendeten Klarlacke, wie z.B. Klarlacke auf Wasser- oder Lösemittelbasis, Pulverklarlacke, Pulverslurry-Klarlacke, lösemittelhaltige und wäßrige Zweikomponenten-Klarlacke usw. eingesetzt werden.

Die transparente Deckbeschichtung kann nach üblichen im Stand der Technik bekannten Verfahren aufgebracht werden. Anschließend wird das beschichtete Substrat üblicherweise in einer Stufe (III) in an sich bekannter Weise eingebrannt.

Noch ein weiterer Gegenstand der vorliegenden Erfindung ist ein mehrschichtig beschichtetes Substrat, wobei der Überzug auf die Substratoberfläche aufgebracht wird, indem
(I) auf eine mit einem üblichen Füller beschichtete Substratoberfläche als Basisbeschichtungszusammensetzung eine wäßrige Beschichtungszusammensetzung aufgebracht wird,
(II) auf die so erhaltene Basisschicht eine geeignete transparente Deckbeschichtungszusammensetzung aufgebracht wird und
(III) die Basisschicht zusammen mit der Deckschicht eingebrannt wird,
dadurch gekennzeichnet, daß die wäßrige Basisbeschichtungszusammensetzung
(A) eine wäßrige Polymerdispersion enthält, die
   (A1) ein Acrylat-Polymer auf Basis von 30 bis 60 Gew.-% C₁-C₈-Alkyl(meth)acrylat- Monomeren, 30 bis 60 Gew.-% vinylaromatischen Monomeren und 0,5 bis 10 Gew.-% (Meth)acrylsäure und
   (A2) mindestens einen nicht- assoziativ wirkenden Verdicker, der ein Acrylat-Copolymer auf Basis von (C₁-C₆)-Alkyl(meth)acrylat und (Meth)acrylsäure enthält,
   (A3) mindestens ein reaktive Gruppen für Isocyanat enthaltendes Poly(meth)acrylatharz und
(B) mindestens ein Vernetzungsmittel
enthält.

### Beispiele

### Beispiel 1

A. 56 Teile einer Mischung verschiedener Acrylatdispersionen, enthaltend 14 Gew.% Acronal ® 290D, 20 Gew.-% eines sek. Acrylats mit einer OH-Zahl von 50 und 22 Gew.% eines primären Acrylats mit einer OH-Zahl von 56 wurden zusammen mit 2 Gew.-% Adipinsäurediisobutyester als Cosolvens, 5 Gew.-% Bunt- und Hilfspigmenten und 0,5 Gew.-% Viscalex® HV 30 durch Zugabe von NN-Dimethylethanolamin auf einen pH-Wert von 7,5 und eine Viskosität von 85 mPas gebracht.
   Die Bunt- und Hilfspigmente waren zuvor in üblicher Weise mit einem Teil der Acrylatdispersionen und einem Netzmittel auf einer Rührwerksmühle bis auf eine Kornfeinheit von 5 bis 10 µm gemahlen worden.
   Der Festkörper des erhaltenen Basislackes betrug 34 %.
B. 95 Teile des in A. erhaltenen Basislackes wurden unmittelbar vor der Applikation mit 5 Teilen einer Mischung aus 60 Teilen Basonat L 8878 und 40 Teilen Dimethylsulfoxid versetzt.
   Der Lack wurde in an sich bekannter Weise auf ein Substrat aufgebracht. Nach dem Aushärten konnte der Lack mit beliebigen Klarlacken, einschließlich Pulverslurryklarlacken, überlackiert und gemeinsam eingebrannt werden. Die Aushärtung erfolgte gleichmäßig und das fertig lackiert Substrat zeigte einen guten Glanz.

### Beispiel 2

A. Es wurde ein Basislack mit einem Festkörper von 34 Gew.-% wie in Beispiel 1 A hergestellt.
B. 94 Teile des in A. erhaltenen Basislackes wurden unmittelbar vor der Applikation mit 6 Teilen einer Mischung aus 70 Teilen butanonoxim blockiertem Isophorondiisocyanat und 30 Teilen 1,2-Propylenglykol versetzt.
   Der Lack wurde in an sich bekannter Weise auf ein Substrat aufgebracht. Nach dem Aushärten konnte der Lack mit beliebigen Klarlacken, einschließlich Pulverslurryklarlacken, überlackiert und gemeinsam eingebrannt werden. Die Aushärtung erfolgte gleichmäßig und das fertig lackiert Substrat zeigte einen guten Glanz.

## Patentansprüche

1. Härtbare Basisbeschichtungszusammensetzung, die
(A1) ein Acrylat-Polymer auf Basis von 30 bis 60 Gew.-% C₁-C₈-Alkyl(meth)acrylat- Monomeren, 30 bis 60 Gew.-% vinylaromatischen Monomeren und 0,5 bis 10 Gew.-% (Meth)acrylsäure und
(A2) mindestens einen nicht-assoziativ wirkenden Verdicker, der ein Acrylat-Copolymer auf Basis von (C₁-C₆)-Alkyl(meth)acrylat und (Meth)acrylsäure enthält,
(A3) mindestens ein reaktive Gruppen für lsocyanat enthaltendes Poly(meth)acrylatharz und
(B) mindestens ein Vernetzungsmittel
enthält.

2. Härtbare Basisbeschichtungszusammensetzung nach Anspruch 1, **dadurch gekennzeichnet, daß** als C₁-C₈-Alkyl(meth)acrylat-Monomere der Komponente (A1) Methyl(meth)acrylat, Ethyl(meth)acrylat, Butyl(meth)acrylat und 2-Ethylhexyl(meth)acrylat eingesetzt werden.

3. Härtbare Basisbeschichtungszusammensetzung nach einem der Ansprüche 1 oder 2, **dadurch gekennzeichnet, daß** als vinylaromatische Monomere Styrol, α-Alkylstyrol und Vinyltoluol eingesetzt werden.

4. Härtbare Basisbeschichtungszusammensetzung nach einem der Ansprüche 1 bis 3, **dadurch gekennzeichnet, daß** das Acrylat-Copolymer der Komponente (A2) als Monomereinheiten (Meth)acrylsäure und mindestens zwei unterschiedliche Acrylatmonomere enthält, wobei die (Meth)acrylsäure bevorzugt in Mengen von 40 Gew.-% bis 60 Gew.-%, besonders bevorzugt von 46 Gew.-% bis 55 Gew.-%, bezogen auf die Menge des gesamten Copolymers, enthalten ist und das (C₁-C₆)-Alkyl(meth)acrylatmonmer I vorzugsweise in Mengen von 30 Gew.-% bis 50 Gew.-%, insbesondere 36 Gew.-% bis 46 Gew.-%, und das (Meth)acrylatpolymer II vorzugsweise in Mengen von 1 Gew.-% bis 10 Gew.-%, insbesondere 2 Gew.-% bis 8 Gew.-%, jeweils bezogen auf die Menge des gesamten Copolymers, enthalten sind.

5. Härtbare Basisbeschichtungszusammensetzung nach einem der Ansprüche 1 bis 4, **dadurch gekennzeichnet, daß** als für Isocyanat reaktive Gruppen enthaltendes Poly(meth)acrylatharze hydroxylgruppenhaltige Poly(meth)acrylatharze mit einer OH-Zahl von 70 bis 220 mg/KOH/g und einer Säurezahl von 0 bis 20 mgKOH/g eingesetzt werden.

6. Härtbare Basisbeschichtungszusammensetzung nach einem der Ansprüche 1 bis 7, **dadurch gekennzeichnet, daß** es von 5 bis 25 Gew.-% Effektpigmente, organische und/oder anorganische farbgebende Pigmente enthält.

7. Härtbare Basisbeschichtungszusammensetzung nach Anspruch 6, **dadurch gekennzeichnet, daß** es organische und/oder anorganische farbgebende Pigmente und die Komponente A in einer Menge von 25 bis 50 Gew.-%, bezogen auf den Festkörpergehalt, enthält.

8. Härtbare Basisbeschichtungszusammensetzung nach Anspruch 6, **dadurch gekennzeichnet, daß** es Effektpigmente und die Komponente A in einer Menge von 15 bis 30 Gew.-%, bezogen auf den Festkörpergehalt, enthält.

9. Verfahren zur Herstellung eines eines schützenden und/oder dekorativen Überzugs auf einer Substratoberfläche, bei dem
(I) auf eine mit einem üblichen Füller beschichtete Substratoberfläche als Basisbeschichtungszusammensetzung eine wäßrige Beschichtungszusammensetzung aufgebracht wird,
(II) auf die so erhaltene Basisschicht eine geeignete transparente Deckbeschichtungszusammensetzung aufgebracht wird und
(III) die Basisschicht zusammen mit der Deckschicht eingebrannt wird,
**dadurch gekennzeichnet, daß** die wäßrige Basisbeschichtungszusammensetzung
(A) eine wäßrige Polymerdispersion enthält, die
(A1) ein Acrylat-Polymer auf Basis von 30 bis 60 Gew.-% C₁-C₈-Alkyl(meth)acrylat- Monomeren, 30 bis 60 Gew.-% vinylaromatischen Monomeren und 0,5 bis 10 Gew.-% (Meth)acrylsäure und
(A2) mindestens einen nicht-assoziativ wirkenden Verdicker, der ein Acrylat-Copolymer auf Basis von (C₁-C₆)-Alkyl(meth)acrylat und (Meth)acrylsäure enthält,
(A3) mindestens ein reaktive Gruppen für Isocyanat enthaltendes Poly(meth)acrylatharz und
(B) mindestens ein Vernetzungsmittel
enthält.

10. Verfahren nach Anspruch 9, **dadurch gekennzeichnet, daß** als transparente Deckbeschichtungszusammensetzung in Stufe II Klarlacke auf Wasser- oder Lösemittebasis, Pulverklarlacke, Pulverslurry-Klarlacke, lösemittelhaltige und wäßrige Zweikomponenten-Klarlacke eingesetzt werden.

11. Mehrschichtig beschichtetes Substrat, wobei der Überzug auf die Substratoberfläche aufgebracht wird, indem
(I) auf eine mit einem üblichen Füller beschichtete Substratoberfläche als Basisbeschichtungszusammensetzung eine wäßrige Beschichtungszusammensetzung aufgebracht wird,
(II) auf die so erhaltene Basisschicht eine geeignete transparente Deckbeschichtungszusammensetzung aufgebracht wird und
(III) die Basisschicht zusammen mit der Deckschicht eingebrannt wird,
**dadurch gekennzeichnet, daß** die wäßrige Basisbeschichtungszusammensetzung
(A) eine wäßrige Polymerdispersion enthält, die
(A1) ein Acrylat-Polymer auf Basis von 30 bis 60 Gew.-% C₁-C₈-Alkyl(meth)acrylat- Monomeren, 30 bis 60 Gew.-% vinylaromatischen Monomeren und 0,5 bis 10 Gew.-% (Meth)acrylsäure und
(A2) mindestens einen nicht-assoziativ wirkenden Verdicker, der ein Acrylat-Copolymer auf Basis von (C₁-C₆)-Alkyl(meth)acrylat und (Meth)acrylsäure enthält,
(A3) mindestens ein reaktive Gruppen für Isocyanat enthaltendes Poly(meth)acrylatharz und
(B) mindestens ein Vernetzungsmittel
enthält.

## Claims

1. A curable base coating composition comprising
(A1) an acrylate polymer based on 30 to 60% by weight of C₁-C₈-alkyl (meth)acrylate monomer, 30 to 60% by weight of vinylaromatic monomer and 0.5 to 10% by weight of (meth)acrylic acid, and
(A2) at least one nonassociative thickener comprising an acrylate copolymer based on C₁-C₆-alkyl (meth)acrylate and (meth)acrylic acid,
(A3) at least one poly(meth)acrylate resin containing isocyanate reactive groups, and
(B) at least one crosslinker.

2. The curable base coating composition of claim 1, wherein the C₁-C₈-alkyl (meth)acrylate monomers of component (A1) are methyl (meth)acrylate, ethyl (meth)acrylate, butyl (meth)acrylate and 2-ethylhexyl (meth)acrylate.

3. The curable base coating composition of either of claims 1 and 2, wherein the vinylaromatic monomers used are styrene, α-alkylstyrene and vinyltoluene.

4. The curable base coating composition of any of claims 1 to 3, wherein the acrylate copolymer of component (A2) contains units derived from (meth)acrylic acid monomer and at least two different acrylate monomers, the (meth)acrylic acid preferably being present in amounts of 40% by weight to 60% by weight, particularly preferably 46% by weight to 55% by weight, based on total copolymer, and the C₁-C₆-alkyl (meth)acrylate monomer I is preferably present in amounts of 30% by weight to 50% by weight, especially 36% by weight to 46% by weight, and the (meth)acrylate polymer II preferably being present in amounts of 1% by weight to 10% by weight, especially 2% by weight to 8% by weight, each percentage being based on total copolymer.

5. The curable base coating composition of any of claims 1 to 4, wherein the poly(meth)acrylate resins containing isocyanate reactive groups are hydroxyl-containing poly(meth)acrylate resins having an OH number of 70 to 220 mg of KOH/g and an acid number of 0 to 20 mg of KOH/g.

6. The curable base coating composition of any of claims 1 to 5, comprising 5 to 25% by weight of effect pigments, organic and/or inorganic colour pigments.

7. The curable base coating composition of claim 6, comprising organic and/or inorganic color-imparting pigments and component A in an amount of 25 to 50% by weight, based on the solids content.

8. The curable base coating composition of claim 6, comprising effect pigments and component A in an amount of 15 to 30% by weight, based on the solids content.

9. The process for producing a protective and/or decorative coating on a substrate surface by
(I) applying atop a conventionally primer surface coated substrate surface an aqueous coating composition as base coating composition,
(II) applying atop the resulting base coat a suitable transparent top coating composition, and
(III) baking the base coat together with the top coat,
the aqueous base coating composition comprising
(A) an aqueous polymer dispersion comprising
(A1) an acrylate polymer based on 30 to 60% by weight of C₁-C₈-alkyl (meth)acrylate monomer, 30 to 60% by weight of vinylaromatic monomer and 0.5 to 10% by weight of (meth)acrylic acid, and
(A2) at least one nonassociative thickener comprising an acrylate copolymer based on C₁-C₆-alkyl (meth)acrylate and (meth)acrylic acid,
(A3) at least one poly(meth)acrylate resin containing isocyanate reactive groups, and
(B) at least one crosslinker.

10. The process of claim 9, wherein the transparent top coating composition used in step II is selected from clear coatings borne on water or solvent, powder clear coatings, powder slurry clear coatings, solventborne and waterborne two component clear coatings.

11. A multilayeredly coated substrate, the coating being applied to the substrate surface by
(I) applying atop a conventionally primer surfacer coated substrate surface an aqueous coating composition as base coating composition,
(II) applying atop the resulting base coat a suitable transparent top coating composition, and
(III) baking the base coat together with the top coat,
the aqueous base coating composition comprising
(A) an aqueous polymer dispersion comprising
(A1) an acrylate polymer based on 30 to 60% by weight of C₁-C₈-alkyl (meth)acrylate monomer, 30 to 60% by weight of vinylaromatic monomer and 0.5 to 10% by weight of (meth)acrylic acid, and
(A2) at least one nonassociative thickener comprising an acrylate copolymer based on C₁-C₆-alkyl (meth)acrylate and (meth)acrylic acid,
(A3) at least one poly(meth)acrylate resin containing isocyanate reactive groups, and
(B) at least one crosslinker.

## Revendications

1. Composition durcissable d'enduction de base, laquelle comprend
(A1) un polymère acrylate à base de 30 à 60 % en poids de monomères (méth)acrylate d'alkyle en C₁-C₈, 30 à 60 % en poids de monomères vinylaromatiques et 0,5 à 10 % en poids d'acide (méth)acrylique et
(A2) au moins un épaississant à effet non associatif, lequel contient un copolymère acrylate à base de (méth)acrylate d'alkyle en C₁-C₆ et d'acide (méth)acrylique,
(A3) au moins une résine poly(méth)acrylate contenant des groupements réactifs pour l'isocyanate, et
(B) au moins un agent réticulant.

2. Composition durcissable d'enduction de base selon la revendication 1 **caractérisée en ce que** le (méth)acrylate de méthyle, le (méth)acrylate d'éthyle, le (méth)acrylate de butyle et le 2-éthylhexyl(méth)acrylate sont utilisés comme monomères (méth)acrylate d'alkyle en C₁-C₈ du composant (A1).

3. Composition durcissable d'enduction de base selon l'une des revendications 1 ou 2 **caractérisée en ce que** le styrène, l'α-alkylstyrène et le vinyltoluène sont utilisés comme monomères vinylaromatiques.

4. Composition durcissable d'enduction de base selon l'une des revendications 1 à 3 **caractérisée en ce que** le copolymère acrylate du composant (A2) contient de l'acide (méth)acrylique et au moins deux monomères acrylate différents comme unités monomères, l'acide (méth)acrylique étant présent de préférence dans des quantités comprises entre 40 % et 60 % en poids, plus préférentiellement entre 46 % et 55 % en poids par rapport à, la quantité totale de copolymère et le monomère (méth)acrylate d'alkyle en C₁-C₆ I étant présent de préférence dans des quantités comprises entre 30 % et 50 % en poids, notamment entre 36 % et 46 % en poids et le polymère (méth)acrylate II étant présent de préférence dans des quantités comprises entre 1 % et 10 % en poids, notamment entre 2 % et 8 % en poids, ce respectivement en fonction de la quantité totale de copolymère.

5. Composition durcissable d'enduction de base selon l'une des revendications 1 à 4 **caractérisée en ce que** des résines poly(méth)acrylate contenant des groupements hydroxyle, avec un indice hydroxyle compris entre 70 et 220 mg/KOH/g et un indice d'acidité compris entre 0 et 20 mg/KOH/g sont utilisées comme résines poly(méth)acrylate contenant des groupes réactifs pour l'isocyanate.

6. Composition durcissable d'enduction de base selon l'une des revendications 1 à 5 **caractérisée en ce qu'**elle contient 5 à 25 % en poids de pigments à effet, de pigments chromophores organiques et/ou minéraux.

7. Composition durcissable d'enduction de base selon la revendication 6 **caractérisée en ce qu'**elle contient des pigments chromophores organiques et/ou minéraux et le composant A dans une quantité comprise entre 25 % et 50 % en poids par rapport à l'extrait sec.

8. Composition durcissable d'enduction de base selon la revendication 6 **caractérisée en ce qu'**elle contient des pigments à effet et le composant A dans une quantité comprise entre 15 % et 30 % en poids par rapport à l'extrait sec.

9. Procédé pour la fabrication d'un enduit protecteur et/ou décoratif sur la surface d'un substrat dans lequel
(I) comme composition d'enduction de base, une composition d'enduction aqueuse est appliquée sur la surface d'un substrat enduite d'une charge conventionnelle,
(II) une composition transparente de revêtement de finition appropriée est appliquée sur la couche de base ainsi obtenue et
(III) la couche de base est cuite avec la couche de revêtement de finition,
**caractérisé en ce que** la composition d'enduction de base aqueuse
(A) contient une dispersion de polymères aqueuse, laquelle
(A1) contient un polymère acrylate à base de 30 à 60 % en poids de monomères (méth)acrylate d'alkyle en C₁-C₈, 30 à 60 % en poids de monomères vinylaromatiques et 0,5 à 10 % en poids d'acide (méth)acrylique et
(A2) au moins un épaississant à effet non associatif, lequel contient un copolymère acrylate à base de (méth)acrylate d'alkyle en C₁-C₆ et d'acide (méth)acrylique,
(A3) au moins une résine poly(méth)acrylate contenant des groupements réactifs pour l'isocyanate, et
(B) au moins un agent réticulant.

10. Procédé selon la revendication 9, **caractérisé en ce que** des vernis transparents à base d'eau ou de solvant, des vernis transparents en poudre, des vernis transparents en pâte épaisse, des vernis transparents à deux composants contenant du solvant et de l'eau sont utilisés comme composition de revêtement de finition transparente dans l'étape II.

11. Substrat enduit de plusieurs couches, l'enduction de la surface du substrat étant effectuée en ce que
(I) comme composition d'enduction de base, une composition d'enduction aqueuse est appliquée sur la surface d'un substrat enduite d'une charge conventionnelle,
(II) une composition transparente de revêtement de finition appropriée est appliquée sur la couche de base ainsi obtenue et
(III) la couche de base est cuite avec la couche de revêtement de finition,
**caractérisé en ce que** la composition d'enduction de base aqueuse
(A) contient une dispersion de polymères aqueuse, laquelle
(A1) contient un polymère acrylate à base de 30 à 60 % en poids de monomères (méth)acrylate d'alkyle en C₁-C₈, 30 à 60 % en poids de monomères vinylaromatiques et 0,5 à 10 % en poids d'acide (méth)acrylique et
(A2) au moins un épaississant à effet non associatif, lequel contient un copolymère acrylate à base de (méth)acrylate d'alkyle en C₁-C₆ et d'acide (méth)acrylique,
(A3) au moins une résine poly(méth)acrylate contenant des groupements réactifs pour l'isocyanate, et
(B) au moins un agent réticulant.
